# EUROPEAN PATENT APPLICATION

(11) **EP 0 826 875 A2**
(43) Date of publication of application: **04.03.1998**
(21) Application number: 97114789.7
(22) Date of filing: 26.08.1997
(51) Int. Cl.: F02M 37/00, F02M 37/20, F02M 51/00, F02M 63/06, F16N 13/00, B41J 2/02, F04F 7/00

(54) **Liquid injection device**

(30) Priority: 28.08.1996 JP 226564/96; 26.08.1996 JP 223359/96
(71) Applicant: YAMAHA HATSUDOKI KABUSHIKI KAISHA, Iwata-shi Shizuoka-ken, 438 (JP)
(72) Inventor: Otome, Kimitake, Iwata, Shizuoka 438 (JP)
(74) Representative: Grünecker, Kinkeldey, Stockmair & Schwanhäusser Anwaltssozietät

(57) **Abstract**

A liquid injection device comprises a high pressure generating device, having a pressure chamber with a liquid induction port and a high pressure wave delivery port as well as an impulsive high pressure generating source, and an associated injector. Further, said high pressure generating device comprising means for concentrating the generated high pressure wave.

## Description

This invention relates to a liquid injection device comprising a high pressure generating device, having a pressure chamber with a liquid induction port and a high pressure wave delivery port as well as an impulsive high pressure generating source, and an associated injector.

A fuel feed pump for feeding fuel to a combustion chamber of an internal combustion engine is disclosed in Japanese Unexamined Patent Publication Hei 8-82266. The fuel feed pump disclosed in the patent publication is composed of a positive displacement pump incorporating a piezoelectric element, which is arranged such that in a cylinder is provided a piston driven by a piezoelectric element (PZT actuator), the inside space of the cylinder on the piston head side acts as a pressure chamber, and a fuel induction port and a fuel delivery port are open at the cylinder end on (he piston skirt side, both ports being provided with check valves.

In such an arrangement, voltage application to the piezoelectric element causes its volume to change, which drives the piston toward the pressure chamber and changes the volume of the pressure chamber to thereby increase the fuel pressure in the pressure chamber, causing fuel to be pushed out of the delivery port. Thus, fuel pressure in the pressure chamber is increased according to the steady-state volume change of the piezoelectric element in response to the piston movement, or voltage, and the pressurized fuel is pushed out through the check valve of the delivery port to be supplied to the high pressure injector through a fuel pipe.

According to the system disclosed the above-described patent publication, the drive signal for the injector is controlled by taking account of the time lag from the time the drive signal was inputted to the piezoelectric element to the time the piezoelectric element changes in its volume and a required pressure has been reached, so that the injector is controlled in accurate response to pressure rise due to the steady-state volume change of the piezoelectric element.

In practice in driving a piezoelectric element, however, a large impulsive pressure wave is generated just after an inputting of the drive signal, and attenuated while vibrating to reach a steady state pressure. The pressure of the impulsive pressure wave is much larger than that of the piezoelectric element the volume change of which has reached a steady state, but it is a transient pressure, thus no liquid injection technology has been developed utilizing this pressure, including the art described in the foregoing patent publication.

When assuming the application of this impulsive pressure wave to the fuel feed pump, for example, described in the foregoing patent publication, it poses some problems. Although the delivery port with a check valve is disposed opposite to the piston fitted to the end of the piezoelectric element, the size of the delivery port is much smaller than the piston surface. Therefore, very small part of the impulsive pressure wave generated on the piston surface reaches the check valve in the delivery port of the pressure chamber, but the impulsive pressure wave generated on the piston surface not facing the delivery port simply reciprocates between the wall of the fuel pressure chamber 15 and the piston surface, and attenuated without reaching the check valve in the delivery port. Thus, almost all the impulsive high pressure wave generated on the piston surface can not be utilized for fuel injection.

Further, the high pressure wave which has reached the very small delivery port, first proceeds to the check valve in the delivery port of the pressure chamber, and pushes the valve open to consume a part of its energy. This opening of the check valve allows fuel to flow into the fuel pipe in a jet, and energy of the high pressure wave is converted to kinetic energy of fuel transfer, providing further pressure drop. The kinetic energy of the fuel is changed to heat energy due to line resistance of the fuel pipe, and radiated from the wall of the fuel pipe to he lowered. In addition, the injection hole has been opened when the kinetic energy reaches the fuel injection hole, so that the fuel is injected without pressure rise.

Therefore, when the conventional system is employed, the impulsive high pressure wave can not be utilized effectively, the high pressure wave generated in the pressure chamber will never boost the fuel pressure in the injection hole, fuel in the injection hole falls in obtaining high injection pressure as well as high injection speed. In addition, energy of the high pressure wave is converted to kinetic energy of the fuel, which is subjected to line resistance, preventing increased injection quantity.

In this invention, since energy of the instantaneously generated impulsive wave is utilized, it is desirable that the high pressure wave is boosted as high as possible to raise injection energy, and the resultant impulsive high pressure wave is taken into the injection passage as much as possible without waste for the purpose of effecting efficient use of the high pressure wave energy.

Accordingly, it is an objective of the present invention to provide a liquid injection device as indicated above which facilitates with simple technical means an always reliable use of the generated pressure wave as much as possible with smallest possible attentuation.

According to the present invention this objective is solved for a liquid injection device as indicated above in that said high pressure generating device is comprising means for concentrating the generated high pressure wave.

According to a preferred embodiment of the present invention a high pressure applying area of said impulsive high pressure generating source is oppositely arranged to said delivery port, the respective sectional area of which being larger than the sectional area of said high pressure applying area.

A further enhancement of the concentration is achievable when the sectional area of an injection hole of said injector is smaller than the sectional area of said delivery port.

According to an advantageous embodiment of the present invention said injector comprising a valve operable by the pressure generated by said high pressure generating device or by a drive means adapted to open and close said valve in response to the operation of said high pressure generating device.

A further enhancement of the concentration is achievable when said injection passage is formed so as to decrease its sectional area from the delivery port of the pressure chamber side towards the injection hole.

In the arrangements described above, the high pressure wave generated on the high pressure wave applying surface of the high pressure generating source travels straight-forward and mostly inducted into the opening surface larger than the high pressure wave applying surface provided opposite thereto to be utilized effectively as an injection energy. The inducted high pressure wave is boosted of its pressure while traveling through the reduced diameter section at the end of the injection passage on the opening surface side, and propagated through the injection passage into the injection hole, where it is further boosted of its pressure because of the small sectional area of the injection hole to thereby inject the liquid with large injection energy.

In this way, the high pressure wave generated, for example, by voltage application to a piezoelectric element, can be utilized effectively without waste so as to be a higher pressure wave with a higher energy level. Therefore, the high pressure wave can be propagated through the injection passage without attenuation, thereby lowering the energy loss on the way. The high pressure wave energy which has reached the injection hole is further boosted of its pressure by the small sized injection hole, and converted to kinetic energy of the liquid, causing the liquid to inject from the injection hole. In this case, energy loss is small during propagation in the injection passage, so that the injection quantity can be increased as much. In addition, the pressure wave reaches the injection hole without attenuation, effecting an increase in injection pressure as well as injection speed.

Also, with the foregoing valve means, injection can be performed when the impulsive pressure has reached the valve, but when the injection pressure has not reached there, the injection can be prevented with the valve closed.

A preferable embodiment may comprise both during the time said impulsive high pressure generating means is in operation and out of operation, the injection passage is opened at all times over the area from the upstream side of the valve means near said injection hole to the end of the injection passage on the pressure chamber side.

In this arrangement, no device, such as a check valve, which closes the pipe line over the entire length including its inlet portion, is provided in the injection passage, except valve means in the injection hole, and the passage is open at all times, preventing energy loss of the high pressure energy.

Another preferable embodiment may be provided such that into said pressure chamber are open the end of said injection passage and an communication passage to said liquid supply source, and only the end of said injection passage is open on the wall of the pressure chamber opposite to the impulsive pressure applying surface of said impulsive high pressure generating means.

In this arrangement, in the surface, toward which the impulsive high pressure wave travels, opposite to the impulsive pressure applying surface of the high pressure generating means, is open only the injection passage, and the passage for induction the liquid or the fuel is provided in the side or the backside parallel to the direction of movement of the high pressure wave, so chat the high pressure wave energy is propagated effectively in the injection passage to reach the injection hole.

Yet another preferable embodiment is constructed such that said valve means is arranged so as to be closed when a residual pressure value after the liquid pressure on the outside space with respect to said injection hole is subtracted from the liquid pressure on the injection passage side, is not greater than a predetermined value, and to be opened when the impulsive high pressure of the liquid has reached the valve means.

In this arrangement, the valve means in the injection hole is closed when pressure difference between the upstream and downstream sides of the valve is small, and it is open when the pressure difference exceeds a predetermined value. Therefore, the liquid can be injected at an injection speed in response to the pressure difference and for the duration of the high pressure wave.

Another preferable embodiment may be arranged such that said valve means is provided with valve drive means adapted to open its valve at a timing the impulsive high pressure of the liquid reaches the valve means.

In this arrangement, the valve means of the injection hole is opened by the valve drive means, and no high pressure wave energy is consumed by this valve opening. Therefore, the impulsive high pressure is preserved in the injection hole, effecting a large injection speed. The liquid can be injected also into a space at a high pressure.

As already mentioned above said injection passage is formed so as to decrease its sectional area from its end on the pressure chamber side toward the injection hole.

In this arrangement, the high pressure wave propagated in the injection passage is boosted of its pressure while traveling toward the injection hole through the portion with gradually reduced sectional area, effecting a larger injection speed at the injection hole.

Another preferable emboidment may comprise an impulsive high pressure generating section in said impulsive high pressure means is formed of an electrostrictive element capable of changing its shape in response to changes in intensity of the electric field.

In this arrangement, the electrostrictive element changes its shape the instant a drive current is inputted, and moves toward the liquid. At this instant, liquid particles tend to stay in the place by their inertia, so that in addition to effecting air bleed, an impuslive high pressure can be generated reliably.

Yet another preferable embodiment may have an impulsive high pressure generating section in said impulsive high pressure means is formed of a magnetostrictive element capable of changing its shape in response to changes in intensity of the magnetic field.

In this arrangement, the magnetostrictive element changes its shape the instant a drive current is inputted to change the magnetic field of the electromagnetic coil, and moves toward the liquid. At this instant, liquid particles tend to stay in the place by their inertia, so that in addition to effecting air bleed, an impuslive high pressure can be generated reliably.

Another preferable embodiment may be arranged such that the impulsive high pressure generating section in said impulsive high pressure means is formed of a pair of opposed discharge electrodes immersed in the liquid in said pressure chamber.

In this arrangement, discharging in the liquid allows the discharge energy to be consumed as a vaporization energy through heat, and the liquid is vaporized instantaneously to be expanded. This expanding liquid vapor (bubbles) causes the liquid particles in front of the vapor to be pushed. At this instant, the liquid particles tend to stay in the place by their inertia, generating a large impulsive high pressure wave. The discharge energy can be controlled at will by the voltage applied to the electrodes. In addition, since discharging happens instantaneously, the impulsive high pressure can be increased, as well as injection speed.

Yet another preferable embodiment may be provided such that the impulsive high pressure generating section in said impulsive high pressure means is formed of an electric radiator immersed in the liquid in said pressure chamber.

In this arrangement, electrical energy supply to the electric radiator in the liquid allows the electric energy to radiate in the liquid in the form of heat, which is consumed as a vaporization energy of the liquid, causing the liquid to be vaporized instantaneously to be expanded. This expanding liquid vapor (bubbles) causes the liquid particles in front of the vapor to be pushed. At this instant, the liquid particles tend to stay in the place by their inertia, generating a large impulsive high pressure wave. The discharge energy can be controlled at will by the electric power supplied to the radiator.

In still another preferable embodiment said impulsive high pressure generating means is provided with a laser beam emitting means irradiating the liquid in said pressure chamber.

In this arrangement, the laser vibrates the liquid particles, and high energy can be converted easily into heat energy. Thus, the liquid is allowed to be vaporized instantaneously to be expanded. This expanding liquid vapor (bubbles) causes the liquid particles in front of the vapor to be pushed. At this instant, the liquid particles tend to stay in the place by their inertia, generating a large impulsive high pressure wave.

A preferable embodiment may be constructed such that said liquid injection apparatus is employed as ink injection means of a printing device for supplying and injecting ink to articles to be printed.

In this case where the apparatus is employed as ink injection means of a printing device, ink injection makes use of impuslive high pressure, so that injection speed can be increased, as well as printing speed. Further, valve means is provided near the injection hole, so that ink supply can be controlled properly, preventing blurred printing. Furthermore, if a surface to be printed is placed at a large distance from the injection hole, atomization of the ink particles is accelerated because of high injection speed, effecting even printing in wide areas. In addition, if an article to be printed is moved perpendicular to the direction of injection while controlling the distance between the injection hole and the surface to be printed, printing process can be performed without unevenness or the blur.

Another peferable embodiment may be constructed such that said liquid injection apparatus is employed as fuel injection means for supplying fuel to a combustion chamber of a boiler.

In such fuel injection means of a boiler, fuel is injected through impulsive high pressure, so that fuel injection speed is increased, effecting sufficient fuel atomization. Therefore, even a fuel of low volatility such as a heavy oil can be burned reliably, effecting a higher thermal efficiency with a smaller amount of soot.

In another preferable embodiment said liquid injection apparatus is employed as lubricating oil feeding means of an internal combustion engine for feeding and injecting lubricating oil to the same.

In this case where the apparatus is employed as lubricating oil feeding means of an internal combustion engine, lubricating oil is injected through impulsive high pressure, so that stable and reliable lubricating can be performed, effecting smooth engine operation.

According to another preferable embodiment said liquid injection apparatus is employed as a fuel injection apparatus of an internal combustion engine for directly injecting fuel into an intake system or a combustion chamber of the internal combustion engine.

In this case where the apparatus is employed as a fuel injection apparatus in an internal combustion engine, fuel is injected through impulsive high pressure, so that it can be injected even when the combustion chamber is at a high pressure. Therefore, fuel can be injected for a gasoline engine till the time just before ignition at the end of the compression stroke, and for a diesel engine, fuel can be injected into the combustion chamber at a high pressure during combustion. In this case, fuel injection speed is increased, so that fuel particles are atomized so as to be vaporized reliably, thereby preventing the unburnt component from generating and improving purification of the exhaust gas.

Another preferable embodiment comprising a liquid injection apparatus according to the invention being mounted to a fuel injection type internal combustion engine.

In such an internal combustion engine, fuel is injected through impulsive high pressure, so that fuel injection speed is increased and atomization of fuel particles is accelerated, effecting reliable fuel supply to the combustion chamber at a high pressure. Therefore, a reliable and general purpose fuel injection apparatus can be achieved which is available not only for an intake pipe injection or in-cylinder injection in two-stroke and four-stroke gasoline engines, but also for diesel engines, and in which reliable fuel injection can be effected in all the operating conditions with high combustion efficiency, and generation of unburnt gas is restricted, thereby enhancing the quality of exhaust emissions.

Other preferred embodiments of the present invention are laid down in further dependent claims.

In the following, the present invention is explained in greater detail subject to several embodiments thereof in conjunction with the accompanying drawings, wherein:
Fig. 1 is a structural view of a four-stroke engine embodying this invention.
Fig. 2 is a structural view of an embodiment of a liquid injection apparatus according to this invention.
Figs. 3 are sectional views of a high pressure generating device according to this invention.
Fig. 4 is a structural view of an injector according to this invention.
Figs. 5 are structural views of another injector according to this invention.
Fig. 6 is a detailed structural view of a high pressure generating source according to this invention.
Fig. 7 is a structural view of the high pressure generating source in assembly according to this invention.
Fig. 8 is a structural view of another high pressure generating source in assembly according to this invention.
Fig. 9 is a structural view of another high pressure generating source according to this invention.
Figs. 10 are structural illustrations of yet another high pressure generating source according to this invention.
Figs. 11 are structural illustrations of still another high pressure generating source according to this invention.
Fig. 12 is a diagram showing the relation between the impulsive high pressure wave and its drive signal according to this invention.
Fig. 13 is a structural view of a two-stroke engine embodying this invention.
Fig. 14 is a structural view of an injection valve integrated type fuel injection apparatus according to this invention.
Fig. 15 is a structural view of another embodiment of the injection valve integrated type fuel injection apparatus according to this invention.

Although the present invention is applicable for various kinds of injection devices, for example ink injection devices, lubricant injection devices and others, the present invention will be explained by example of a fuel injection device.

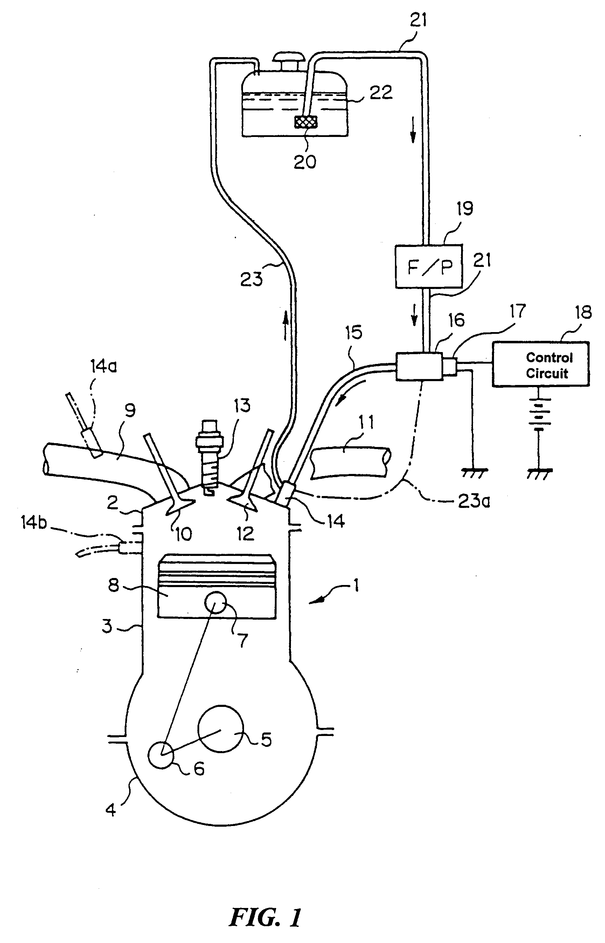

Fig. 1 is a structural view of a four-stroke internal combustion engine incorporating a liquid injection apparatus according to this invention. An engine 1 is composed of a cylinder head 2 constituting the upper section of a combustion chamber, a cylinder block 3 constituting a cylinder of the combustion chamber, and an oil pan 4 forming a crank chamber. A crank shaft 5 in the crank chamber is connected to a piston 8 through a crank pin 6 and a piston pin 7. The cylinder head 2 is provided with an intake pipe 9, at the end of which is fitted an intake valve 10 facing the combustion chamber of the engine. The cylinder head 2 is also provided an exhaust pipe 11, at the end of which is fitted an exhaust valve 12. At the center of the cylinder head 2 is fitted an ignition plug 13.

In this embodiment, at the top of the cylinder head 2 is provided an injector 14, facing the combustion chamber, for directly injecting fuel into the combustion chamber of the engine. This injector 14 is in communication, through a fuel pipe 15, with a high pressure generating device 16 according to this invention. The high pressure generating device 16 is provided with an impuslive high pressure generating source 17 composed of electrostrictive means (piezoelectric element as described later). The high pressure generating source 17 is connected to a control circuit 18 and controlled for driving in a predetermined timing. Into the high pressure generating device 16 is inducted fuel from a fuel tank 22 by a fuel pump 19 through a fuel feed pipe 21. Numeral 20 represents a filter. An air bleed pipe 23 is connected to the injector 14, to which is supplied fuel at all times by the fuel pump 19, and bubbles of air, vaporized fuel etc in the fuel pipe 15 and the injector are returned, together with fuel, upwardly to the fuel tank with an air bleed hole (not shown) at the top. In this way, the fuel pipe 15 and the injector 14 are filled with fuel, so that an impulsive high pressure wave will be propagated reliably and collide with the inside wall of the injector 14 just behind the injection hole, allowing further pressure rise.

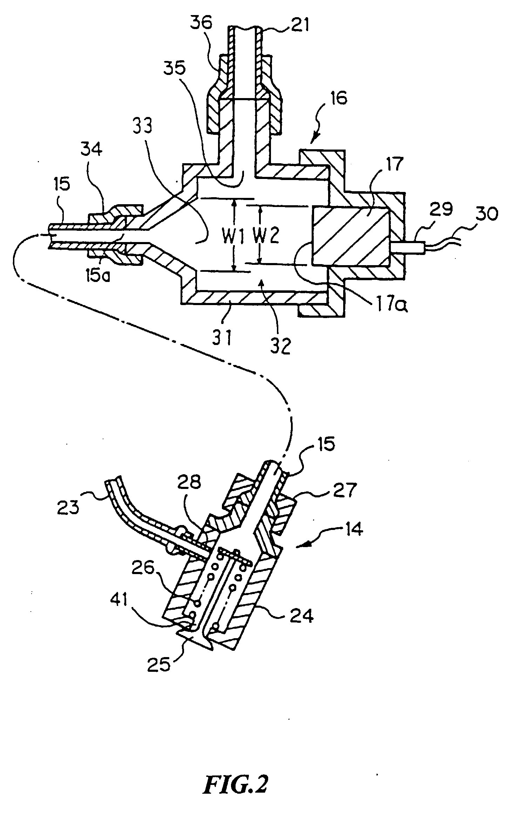

Fig. 2 is a detailed structural view of the high pressure generating device 16 and the injector 14 of the foregoing embodiment. The injector 14 is composed of a valve body 24 with an injection hole 41 at the front, and a valve 25 is fitted in this injection hole 41. The valve 25 is biased toward valve closing by a spring 26. To the injector 14 is connected the fuel pipe 15 through a cap nut 27. The valve body 24 is formed, in the side wall, with an air bleed port 28, to which is connected the air bleed pipe 23. The air bleed port 28 is disposed in the side surface parallel to a moving direction of the impulsive high pressure wave, rather than the place against the pressure wave, so that the energy of the impulsive high pressure wave is prevented from dispersing at the air bleed port 28, ensuring propagation of the high pressure wave toward the injection hole. port.

When the impulsive high pressure wave is propagated to the injector 14 as described later, it collides with the inside surface of the valve 25, effecting further pressure rise. The energy causes the valve 25 to be opened against the bias of a spring 26, and fuel to be injected. That is, when the pressure difference between the combustion chamber to receive fuel injection and the valve body 24 is smaller than a value predetermined by the spring 26, the valve 25 is held closed. On the other hand, when the impulsive high pressure wave reaches the valve body and the pressure difference between the inside and the outside of the valve becomes larger than a predetermined value, then the valve 25 is opened and fuel is injected.

The high pressure generating device 16 is composed, for example, of a cylindrical body 31, inside which is formed the pressure chamber 32. In one end of of the pressure chamber 32 is fitted the high pressure generating source 17 composed, for example, of a piezoelectric element (described later). The high pressure generating source 17 is adapted to generate an impulsive high pressure wave in the pressure chamber 32 so as to apply an impulsive pressure to fuel in the pressure chamber 32. At one end of the cylinder body 31 on the side opposite to a surface 17a from which the impulsive high pressure wave is applied to the fuel in the pressure chamber, is open a high pressure wave delivery port 33 into the pressure chamber 32. To the delivery port 33 is connected, through a cap nut 34, the fuel pipe 15 in communication with the injector 14. An injection passage 15a is composed of an inside passage of the fuel pipe 15 and the delivery port 33 at the end thereof.

In this embodiment, the range W1 of the opening surface of the delivery port 33 is larger than the range W2 of the sectional area of the high pressure wave applying surface 17a opposite thereto, and the high pressure wave applying surface 17a is provided at a position within the range W1 of and opposite to the delivery port 33. In addition, the delivery port 33 decreases its diameter, in a conical shape, toward the movement of the high pressure wave, and connected at its end to the fuel pope 15.

In this arrangement, as described later, the impulsive high pressure wave from the high pressure wave supply surface 17a, mainly composed of straightforward elements, mostly enters into the delivery port 33 having a large cross sectional range W1 including the range W2 of the high pressure applying surface 17a. The high pressure wave, then, is boosted of its pressure while traveling in the conical and reduced diameter section, acquiring a larger energy, and propagated in the injection passage 15 toward the injector 14.

The high pressure generating source 17 is connected, through a seal member 29, to the control circuit 18 (Fig. 1), by a lead wire 30. At the side of the cylindrical body 31 perpendicular to the impulsive high pressure wave applying surface 17a of the high pressure generating source 17, that is, the side perpendicular to the moving direction of the high pressure wave, is open a fuel induction port 35 facing the pressure chamber 32. To the fuel induction port 35 is connected, through a cap nut 36, the fuel feed pipe 21 in communication with the fuel pump 19 (Fig. 1).

In the fuel injection apparatus as described above, when a drive voltage is applied to the piezoelectric element (not shown) of the high pressure generating source 17 with fuel filled in the pressure chamber 32, an impulsive high pressure wave is generated the instant the piezoelectric element changes its shape.

Generation of the high pressure wave and its functions are as follows.

First, the piezoelectric element changes its shape the instant a voltage is applied, and the high pressure wave applying surface 17a moves toward the pressure chamber. Although the instantaneous movement pushes liquid (fuel) particles in the pressure chamber, they tend to keep their position in the state of rest, so that an impulsive high pressure is generated on the fuel in the pressure chamber 32. Therefore, the impulsive high pressure wave is propagated instantaneously from the high pressure wave applying surface 17a, in the direction perpendicular to the applying surface 17a, toward the high pressure wave delivery port 33 opposite to the applying surface. Although the pressure wave passes the fuel induction port 35 open at the side of the pressure chamber 32 during propagation, pressure of the high pressure wave does not have any substantial influence on the fuel in the fuel induction port 35 and the fuel feed pipe 21 connected thereto because of the direction of the opening of the port 35 being perpendicular to the moving direction of the high pressure wave, and thus high pressure wave energy is never consumed. Therefore, no cutoff means such as a check valve is necessary in the fuel induction port 35. Unless the fuel induction port 35 is disposed in front of the high pressure wave applying surface 17a, it may be located so as to face the pressure chamber 32, in parallel to the high pressure generating source 17.

The impulsive high pressure wave which has reached the opposite end surface of the cylindrical body 31 from the high pressure wave applying surface 17a of the high pressure generating source 17, enters into the fuel delivery port 33 formed exclusively in this surface and having a wide range W1 described above, and is propagated toward the injector 14 through the fuel in the injection passage 15a. In this time, no cutoff member such as a check valve is provided in the fuel delivery port 33, so that the high pressure wave enters into the injection passage 15a without energy consumption.

The size of the end of the fuel delivery port 33 on the pressure chamber 32 side is larger than the sectional area of the injection passage 15a, the fuel delivery port 33 reduces it diameter, in a conical shape, to a small sectional area of the injection passage 15a, and in addition, the sectional area of the injection passage 15a is larger than that of the injection hole 41 occupied during the valve 25 opening. Therefore, the impulsive pressure, which has reached the end of the delivery port 33 on the pressure chamber 32 side, is increased, as it is inducted from the delivery port through the injection passage 15a into the injection hole 41. Thus, fuel injection can be performed at a high pressure.

The impulsive high pressure wave which has reached the injector 14, as described above, causes the valve to be opened against the bias of the spring 26, and high pressure fuel to be injected from the injection hole 41. In this embodiment, the injector 14, as shown in Fig. 1, is located at the top of the cylinder head, for direct injection to the cylinder, but instead, it may be provided in the middle of the intake pipe 9, as the injector 14a shown in a single dot and dash line, or may be disposed in the side wall of the cylinder block 3, for direct injection to the cylinder, as the injector 14b also shown in a single dot and dash line. In the foregoing embodiment, the air bleed pipe 23 connects the injector 14, and the fuel tank 22 or gas-liquid separating means, but instead, it may be disposed, as shown in a single dot and dash line in Fig. 1, so as to connect the injector 14 and the high pressure generating device 16. Thus, air and fuel vapor in the fuel pipe 15 and the injector 14 are discharged into the combustion chamber during fuel injection. Even after the air discharge through several times of injections, fuel vapor generated by heat transmission from the combustion chamber, in addition to being discharged into the combustion chamber, can be returned, for condensation, to the pressure chamber 32, remote from the combustion chamber and thus at a low temperature, through residual pressure still remaining in the injector 14 after closing of the valve 25.

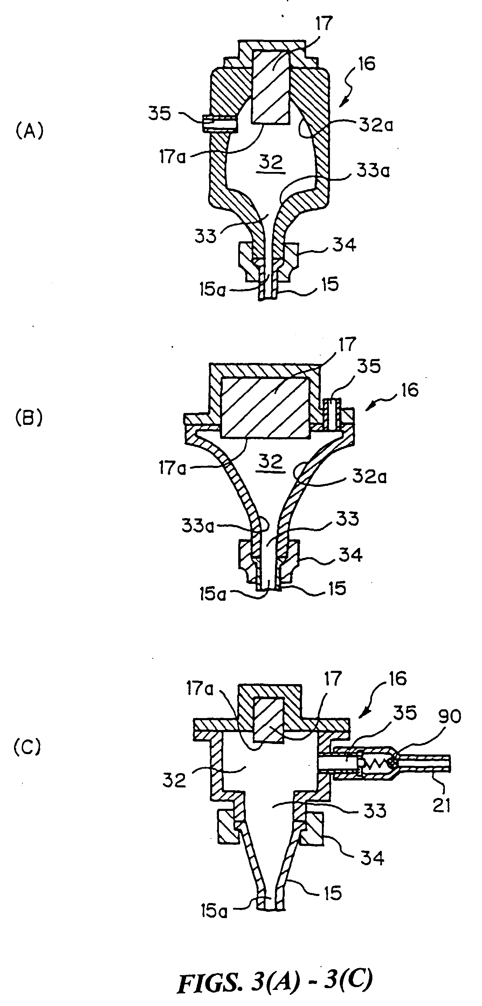

Figs. 3 are sectional structural views of other examples of the high pressure generating device 16. Fig. 3(A) shows an example of a pressure chamber 32 with a side wall 32a of an approximately elliptical curved shape. The high pressure generating source 17 is fitted in the top of the pressure chamber 32 with the elliptical curve, and the fuel induction port 35 is open on its side. In this example, the end portion of the fuel injection passage 15a on the pressure chamber side, or the inside surface 33a of the fuel delivery port 33, decreases its diameter, in a inverse conical shape or the shape of a funnel, with the sectional area of the injection passage 15a reduced gradually toward the injection hole in the opposite end (ie in the direction of movement of the high pressure wave).

In the high pressure generating device 16 as described above, as for the impulsive high pressure wave from the high pressure wave applying surface 17a of the high pressure generating source 17, straightforward components from the applying surface 17a are propagated toward the delivery port 33, while other component directed to the side are reflected at the side wall 32a of the elliptical curve and propagated toward the center of the opening surface of the delivery port 33. In this way, the high pressure wave focused on the opening surface of the delivery port 33, is boosted of its pressure while traveling through the funnel shaped reduced diameter section at the inlet of the injection passage, acquiring a higher pressure, and propagated through the injection passage 15a toward the injection hole on the outlet side of the passage. In this case, the optimum size and shape of the elliptical curve on the side wall 32, and the position of the high pressure wave applying surface 17a of the high pressure generating source 17, are determined in advance, for example by experiment, so that the reflection wave of the impulsive high pressure wave generated by the high pressure generating source 17 can be focused on the center of the opening surface of the delivery port 33.

At one of the two elliptise centers of the side wall 32a of the elliptical curve is disposed the high pressure applying surface 17a, and at the other the delivery port 33, the sectional area at the end of the delivery port 33 being larger than that of the high pressure applying surface, so that the impulsive high pressure wave can be focused efficiently and inducted from the delivery port 33 into the fuel pipe 15. As for the impulsive high pressure energy, the straightforward elements are larger than the other elements, therefore although the fuel induction port 35 is provided on the side wall 32a, only a small amount of energy of the impulsive high pressure wave is propagated from the fuel feed pipe 21 toward the fuel pump 19.

In this way, the impulsive high pressure wave can be boosted of its pressure, acquiring a higher energy in the injection hole, and fuel can be injected with large injection energy.

Fig. 3(B) shows an example of the pressure chamber formed into an inverse conical shape or the shape of a funnel. In this example, the side wall 32a of the pressure chamber 32 larger in sectional area than the high pressure applying surface 17a, decreases its diameter and joined smoothly to the inside surface 33a of the delivery port 33. The fuel induction port 35 is provided rearwardly of the high pressure wave applying surface 17a.

In the high pressure generating device 16 described above, the impulsive high pressure wave from the high pressure wave applying surface 17a, as in the example of Fig. 3(A), the impulsive high pressure wave from the high pressure wave applying surface 17a is boosted of its pressure while traveling through the pressure chamber 32 with the sectional area reduced toward the movement, acquiring a higher pressure, and enters into the injection passage 15a to be propagated to the injection hole, injecting fuel through its energy.

Fig. 3(C) shows an example of the pressure chamber 32, with the end portion of the fuel pipe 15 connected to the delivery port 33 reduced of its diameter toward the movement of the high pressure wave. In this example, on the side of the pressure chamber 32 is open the fuel induction port 35, in which is provided a check ball type check valve 90. As described above, the opening at the side portion of the pressure chamber has no influence on attenuation of the high pressure wave energy, therefore, this valve 90 will never cause attenuation of the impulsive high pressure. Such a check valve 90 ensures the prevention of back flow of the fuel. A fuel induction port 35 with a check valve may be provided forwardly of the high pressure wave applying surface 17a and in parallel with the delivery port 33, though not desirable. The high pressure wave energy consumed when the check valve is closed against the delivery energy of the fuel pump 19, is very small, and the check valve does not disperse the energy of the impulsive high pressure wave in the direction of the fuel feed pipe 21.

In this example, opposite to the delivery port 33 is provided a high pressure wave applying surface 17a of the high pressure generating source 17 smaller in sectional area than the delivery port, and the relative position and size of the delivery port 33 and the high pressure generating source 17 are determined so that the high pressure wave applying surface 17a falls within the range of the opening surface of the delivery port 33. In this way, the central portion, with strongest energy, of the impulsive high pressure wave from the high pressure generating source 17, enters reliably into the delivery port, being boosted here of its pressure and acquiring a higher energy, and is propagated toward the injection hole through the injection passage 15a.

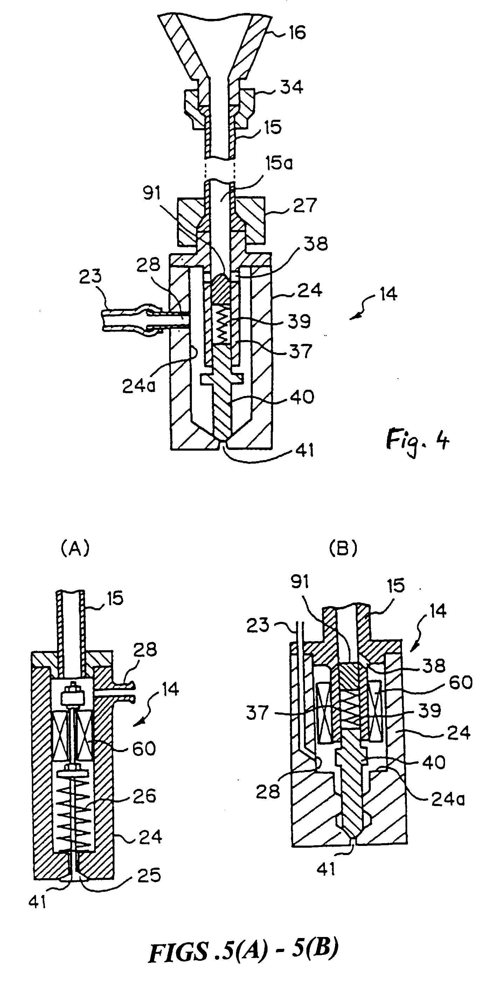

Fig. 4 shows another structural example of the injector of this invention. While the injector shown in Fig. 2 is of an outwardly opening valve type, with the injector opening outwardly, the injector exemplified in this figure is of an inwardly opening valve type, with a valve opening inwardly. A valve 40 is disposed, for sliding movement in a guide sleeve 37, inside a injection hole 41 formed at the front of the valve body 24. The valve 40 is biased by a spring 39 toward the injection hole 41 in a state of valve closing. At the base section of the guide sleeve 37 is open a communication hole 38, which provides communication between a fuel injection passage 15a in the fuel pipe 15 and a combustion passage 24a in the valve body 24. The spring 39 is disposed in the guide sleeve 38, and fitted in a sealed space into which ingress of fuel is prevented by means of an upper seal member 91 fixed to the sleeve 37 and a seal ring (not shown) at the lower end. Into the valve body 24 is open an air bleed port 28, which is in communication with the fuel tank 22 (Fig. 1) through the air bleed pipe 23.

In the arrangement as described above, when a impulsive high pressure wave is propagated from the high pressure generating device 16 through fuel in the injection passage 15a, has reached the injector 14, high pressure energy is inducted inside the valve 24, causing the valve 40 to be pushed up against the spring 39, and the injection hole 41 to be opened for fuel injection. The impuslive high pressure wave is propagated to the communication hole 38, without attenuation, with the help of the conical configuration of the upper part of the seal member 91, and enters from the communication hole 38 into the cylindrical fuel passage chamber 24a. The impulsive high pressure wave collides with the wall of the fuel passage chamber 24a, effecting pressure rise in the upper part of the fuel passage chamber 24a. The second impulsive high pressure wave is propagated from this increased pressure section toward the injection hole 41 at the bottom of the fuel passage chamber 24a. The air bleed port 28 is provided in the side wall in the middle of the fuel passage chamber 24a, and energy of the second impulsive high pressure wave is never dissipated.

Figs. 5(A), (B) show yet another structural example of the injector of this invention, These embodiments are examples provided with drive means for opening/closing the valve. The injector 14 shown in Fig. (A), as in Fig. 2, is composed of an outwardly opening type valve 25, and provided with an electromagnetic solenoid 60 for driving the valve 25. In this arrangement, the electromagnetic solenoid is energized at a timing the impulsive high pressure wave reaches from the high pressure generating device 16, causing the valve 25 to be opened and fuel to be injected from the injection hole 41. As for the timing, the interval between the time when a drive voltage is applied to the high pressure generating source 17 of the high pressure generating device and the time when the high pressure wave reaches the injector 14, is determined, for example, by experiment, and the control circuit is arranged such that the solenoid 60 is energized at this timing.

In the arrangement as described above, energy of the high pressure wave is not consumed through valve opening, so that liquid fuel can be injected with even larger injection energy. The electromagnetic solenoid 60 is provided, in the circumference, with a longitudinal cutout providing communication between the upper and lower sides thereof, so that the impulsive high pressure wave can be propagated smoothly toward the injection hole 41. A longitudinal recess may be provided in the circumference of the electromagnetic solenoid 60 on the case body 24 side.

The injector 14 shown in Fig. 5(B), as in Fig. 4, is composed of an inwardly opening type valve 40, and provided with an electromagnetic solenoid 60 for driving the valve 40. Structures and functions of this electromagnetic solenoid 60 are similar to the embodiment in Fig. 5(A), and also in this embodiment, energy of the high pressure wave is not consumed through valve opening, so that liquid fuel can be injected with large injection energy. The communication hole 38 is inclined, which allows the impulsive high pressure wave to be inducted into the fuel passage chamber 24a with lowest possible attenuation. The electromagnetic solenoid 60 is provided, in the circumference at places facing the outlets of the communication holes 38 on the fuel passage chamber 24a side, with longitudinal cutouts providing communication between the upper and lower sides thereof, the number of the cutouts being in agreement with that of the communication holes 38. The air bleed port 28 is disposed on the injection hole 41 side from the electromagnetic solenoid 60, so that air can be removed even in the areas close to the injection hole 41.

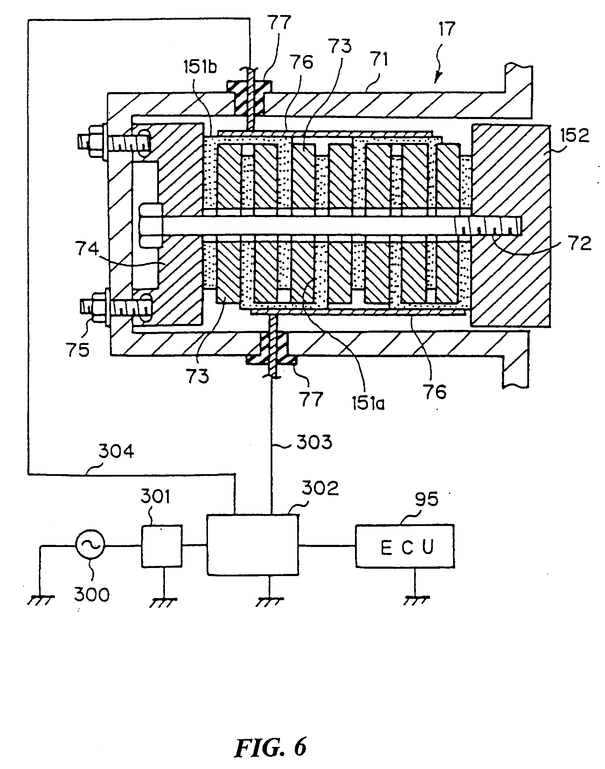

Fig. 6 is a detailed structural view of a high pressure generating source 17 utilizing a piezoelectric element. The high pressure generating source 17 is composed of a plurality of piezoelectric elements 73 provided in a sealed case 71, and between the piezoelectric elements 73, positive and negative electrodes 151a, 151b are disposed alternately. The piezoelectric elements 73, and positive and negative electrodes 151a, 151b are held in layers between a holder 74 and a plunger 152, and fastened together with a bolt 72. The piezoelectric elements 73 fastened together integrally with a bolt 72, are mounted to the sealed case 71 with screw members 75 through the bolder 74. The positive electrodes 151a and the negative electrodes 151b are connected to their respective conductor plates 76, and further to a voltage regulator 302 through positive and negative charge supply wires 303, 304. To the outlets of the positive and negative charge supply wires 303, 304 are fitted sealing grommets 77, maintaining tightness of the casing. The voltage regulator 302 is connected to an ECU 95 to be controlled for driving as described later. Numeral 300 represents an AC power source, and numeral 301 an AC-DC converter circuit.

The piezoelectric element referred to herein is a known piezoelectric actuator composed of elements with what is called piezoelectric effect. Materials with piezoelectric effect includes various substances from quartz to polymeric material, but titanate zirconate lead (PZT), a type of piezoelectric ceramics, is typical for the material of a piezoelectric actuator.

As shown in Fig. 6, an electrostrictive element is formed by a plurality (seven sheets in this example) of piezoelectric elements (piezoelectric ceramics) 73, and positive and negative electrodes 151a, 151b disposed so as to hold these elements in between in integrated relation. An AC current from the AC power source is converted to a DC voltage through an AC-DC converter circuit 301 to be inputted to the voltage regulator 302.

The voltage regulator 302 is arranged such that out of the two outputs controlled by the ECU 95 and connected by respective positive and negative charge supply wires 303, 304, the output on the positive charge supply wire 303 side is regulated to a given positive voltage, while the output on the negative charge supply wire 304 side is grounded. When lowering the voltage of the positive electrode 151a, a part of charge of the positive electrode 151a is grounded. Piezoelectric ceramics between the positive and negative electrodes 151a, 151b changes its shape in the direction of thickness in proportion to the intensity of the electric field produced by the two electrodes. The changes in shape (seven changes in this figure) are accumulated to become a large displacement.

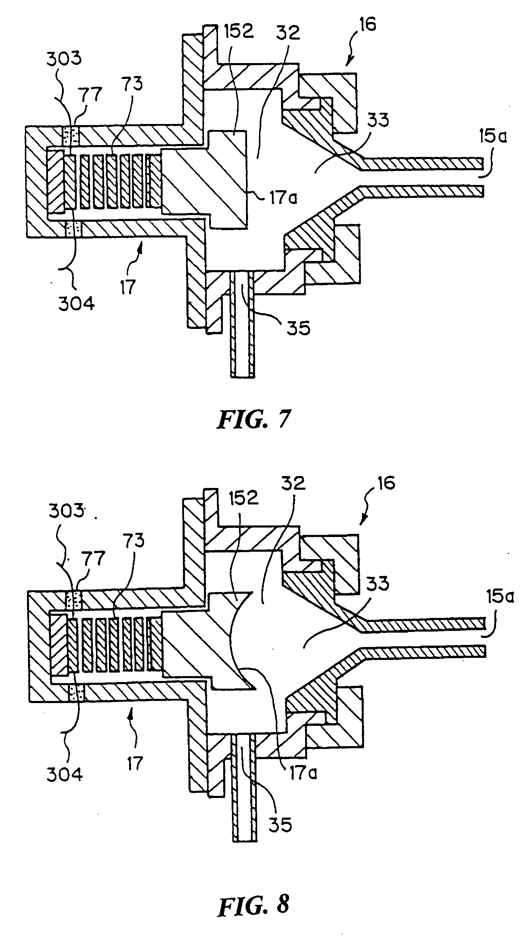

Fig. 7 is a structural view of a high pressure generating device 16 incorporating a high pressure generating section 17 composed of a piezoelectric element, The piezoelectric element 73 in the figure shows an outlook with electrodes 151a, 151b and conductor plate 76 omitted. As shown in the figure, a plunger 152 is provided facing the pressure chamber 32. The end surface of the plunger 152 constitutes the high pressure applying surface 17a. Stepped voltage application to the piezoelectric element causes displacement of the plunger 152, pushing the fuel in the pressure chamber 32 and generating the impulsive high pressure wave, as described above, which enters the injection passage 15a to be propagated to the injection hole.

The dimension of the delivery port 33a is made a little larger than that of the high pressure generating section 17, so that the straightforward components of the impulsive wave from the high pressure generating section 17, can be inducted more reliably from the delivery port 33a into the injection passage.

Fig. 8 shows another example of the plunger 132. In this example, the high pressure wave applying surface 17a at the end of the plunger 152, is formed into a concave, and the high pressure wave is focused on the center of the delivery port 33. Other structures and functions is the same as in Fig. 7

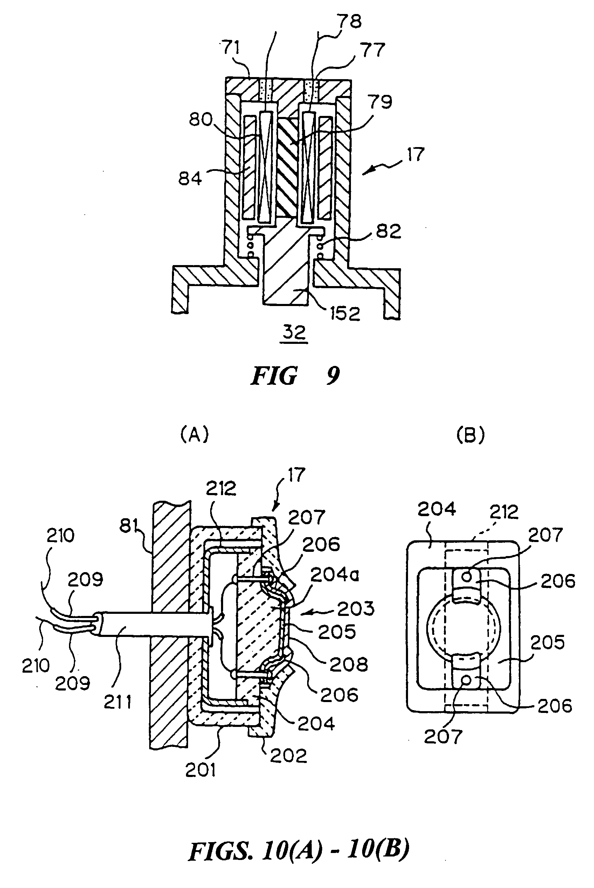

Fig. 9 is a structural view of another embodiment of the high pressure generating source 17. In this embodiment, a magnetostrictive element is utilized instead of the foregoing electrostrictive element. The magnetostrictive element is composed of a magnetic coil made of a magnetroelectric material capable of expanding and shrinking in the magnetic field, such as ternary alloy of terbium, dysprosium, and lead, and a coil wound around the magnetic core. The magnetic core is adapted to expand and shrink by controlling the amount of energization (e.g. voltage or current).

As shown in Fig. 9, around a magnetostrictive element 79 is wound a coil 80, around which is fitted a permanent magnet 84. At the end of the magnetostrictive element 79 is fixed a plunger 152. The plunger 152 is biased by a spring 82 in a direction of retraction from the pressure chamber 32. The coil 80 is connected to the voltage regulator through lead wires 78. The voltage regulator, as in the foregoing embodiment, is connected to the ECU, and adapted to control the drive current to the coil 80 and to regulate the voltage applied to the magnetostrictive element 79. An increased voltage to the coil 80 increases the drive current in the coil and also the intensity of the magnetic field, and thus the voltage applied to the magnetostrictive element 79 is increased, generating a large impulsive high pressure wave. Other structures and functions are similar to the foregoing embodiment utilizing the electrostrictive element. As for driving of this magnetostrictive element 79, a current regulator may be disposed in place of the voltage regulator to apply to the coil 80 electric power of a constant voltage, but with a large and stepped current. In addition, one end of the magnetostrictive element 79 may be fixed to the end plate of the sealed case 71 with bolts, in place of a spring 82.

Figs. 10 are structural views of yet another embodiment of the high pressure generating device according to this invention. In this embodiment, an electrical radiator (heating element) is employed as a high pressure generating source 17. (A) is a sectional view of the heating element, and (B) is a front view of a heating unit 203 before coating of a cover film 208, with a plate 212 fitted temporarily (corresponding to Fig. (A) but viewed from the right side).

The heat generating unit 203 is arranged as follows.

On a glass plate 204 formed with a raised portion 204a at the center on one side, is printed a resistor 205 so as to cover the raised portion 204a, and then sintered. Also, conductive material is printed on the 204a at both sides in the vertical direction as seen in this figure, in such a manner as to cover the resistor 205, and then sintered to form two electrodes 206. Pins 207 made of copper or copper alloy are provided passing through the glass body 204, resistor 205 and electrodes 206, and calked at both ends. Then, on the glass body 204 formed with the resistor 205 and electrodes 206 is further coated a non-electrically conductive but thermally conductive cover film 208 in such a manner as to cover the resistor 205 including the electrodes 206 and pins 207. After the plate 212 supporting the end of a cord 211 containing lead wires 210, is fixed to the glass plate 204, the ends of the lead wires 210 are soldered to the ends of the pins 207, respectively. In this way is formed the heat generating unit 203. The heat generating unit 203 is enclosed liquid-tightly in the case body 201 and case lid 202 made of a ceramic of low thermal conductivity, to form the high pressure generating source 17. Numeral 81 is a support plate, with which the high pressure generating source 17 is fixed so as to face the pressure chamber of the foregoing high pressure generating device.

The case lid 202 is provided with a window at the center, and the cover film 208 comes into direct contact with fuel. When a DC or an AC current is supplied to the lead wires 210, heat is generated in a portion of the resistor 205 between the two electrodes 206, and fuel is vaporized to produce bubbles on the cover film 208. This bubbles, as described above, cause the liquid particles in the pressure chamber to be pressed, effecting an impulsive high pressure. Functions of the liquid injection due to propagation of the impulsive high pressure wave are just as described in the foregoing embodiment.

The thickness of the films of the resistor 205 and electrodes 206 is a few µm, and the cover film 208 has a thickness of 0.2-2mm.

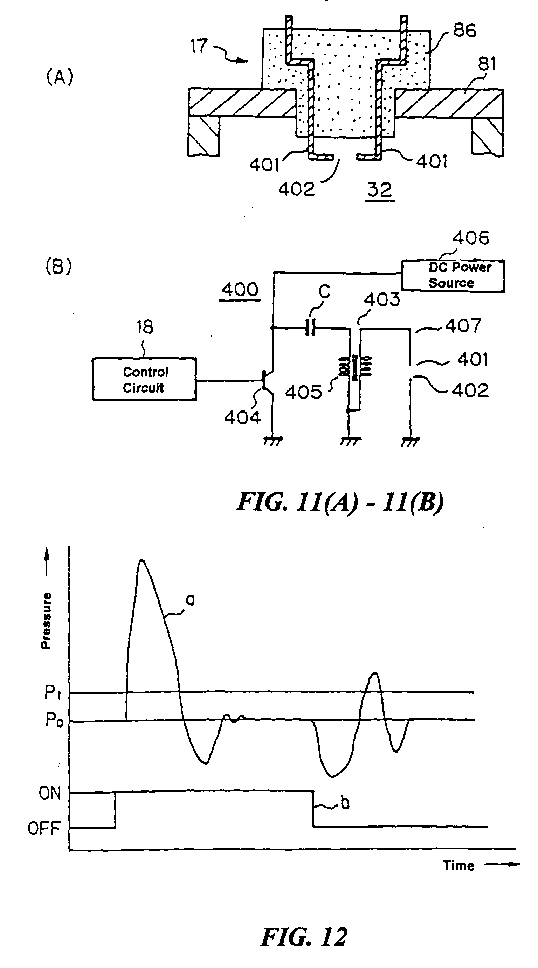

Figs. 11 show yet another example of the high pressure generating source 17 according to this invention. Fig. (A) is a sectional structural view of a portion, and Fig. (B) is a drive circuit diagram of Fig. (A). A pair of opposed discharge electrodes 401 held by an insulator 86 are provided facing the pressure chamber 32 filled with fuel. Between the discharge electrodes 401 is formed a discharge gap 402 of a given distance. A fuel feed circuit 400, as shown in Fig. (B), is arranged such that a capacitor C composed of two electrode plates is provided; in the middle of a coupled circuit 403 coupling both electrode plates, an electronic switch 404 and the primary side of a booster coil 405 are disposed in series; in the middle of the coupled circuit 403, one electrode plate including a electrode plate of the capacitor C, and the middle section of the electronic switch 404, are connected to a DC power source 406; and said discharge gap 402 is formed in the middle of the second coupled circuit 407 connecting both ends of the secondary side of the booster coil 405.

The electronic switch 404 operates through a fuel supply control signal of the control unit 18. When electric energy corresponding to a required fuel supply, is applied to the electrodes of the capacitor C, and the electronic switch 404 is turned on through a fuel supply control signal of the control unit 18, then both sides of the capacitor C conduct electricity through the electronic switch, ground, primary side of the booster coil 405. This discharging in the capacitor C causes generation of high voltage in the secondary side of the booster coil 405, and another discharge between the discharge gap 402 in the pressure chamber 32. The heat caused by the discharge vaporizes fuel instantaneously, which produces bubbles. This bubbles, as described above, cause the liquid particles in the pressure chamber to be pressed, effecting an impulsive high pressure. Functions of the liquid injection due to propagation of the impulsive high pressure wave are just as described in the foregoing embodiment.

In the embodiment in Figs. 11 as described above, if the magnitude of discharging power at the discharge gap 402 within a given time is increased, the amount of fuel delivery will increase. The discharging power at the discharge gap 402 has a positive correlation with the discharging power in the capacitor C. The discharging power at the discharge gap 402, if the voltage of the DC power source 406 is constant, is controlled by the number of cycles of charging and discharging in the capacitor C within a given time. This frequency of charging and discharging in the capacitor C is determined by the frequency of on-off switching of the electronic switch 404, and a larger frequency of charging and discharging in the capacitor C will increase the total discharging power, thus effecting increased fuel supply. For a larger engine load, the frequency of charging and discharging in the capacitor C is increased by means of the control unit 18.

As still another example of the high pressure generating device in which generation of bubbles in liquid fuel by heat energy causes generation of impulsive high pressure which is propagated to the injection hole for fuel injection, a high pressure generating source utilizing a laser beam may be employed. In this case, when a laser beam is applied to liquid fuel in the pressure chamber, the laser bean vibrates the fuel particles to thereby convert the light energy easily to heat energy, as described above. This causes the liquid to be vaporized and expanded instantaneously. The expanding liquid vapor (bubble) pushes fuel particles in front. At this instant, the fuel particles tend to stay in the place by inertia, so that a large impulsive high pressure wave is generated.

Fig. 12 is a diagram showing the relation between the impulsive high pressure generated in a high pressure generating device of this invention, and its drive signal. Line (a) shows a pressure wave and Line (b) a drive signal. In Line (a), P1 represent a pressure of valve opening of the injector with an outwardly opening valve 25 in Fig. 2 or inwardly opening valve 40 in Fig. 4, and P0 represents a pressure in the pressure chamber before pressurization. As shown in the figure, a high pressure much higher than the valve opening pressure is generated impulsively immediately after the drive signal is switched on, and then attenuated rapidly. The embodiments described above are examples in which propagation of the impulsive high pressure just after drive signal input, is made effective use in the liquid. Also, as shown in the figure, just after the drive signal is switched off, the pressure wave goes down for a time and then rise up again due to its reaction, generating a pressure wave exceeding the valve opening pressure P1. Such a peek pressure at the time of switching off of the drive signal may be utilized, for fuel injection, as an impulsive pressure to the injection hole, as the pressure at the time of switching on of the drive signal.

In the case of utilizing an electrostrictive element as a high pressure generating device, as shown in Figs. 6-8, the drive signal is a pulse pressure signal with a voltage larger than a given value, and in the case of a magnetostrictive element shown in Fig. 9, the drive signal is a pulse current signal with a current larger than a given value, or a pulse voltage signal with a voltage larger than a given value. In the case of utilizing the elements shown in Figs. 10 and 11, or a laser beam, the drive signal is a pulse power signal with an electric power over a given value, and the pulse width is set narrower than that of the electrostrictive element. This is because a large impulsive high pressure is generated the instant bubbles are produced and expanded, and because the impulsive high pressure is rather prevented from being generated when bubbles are produced continuously in a state of boiling. Adjustment of the injection flow rate is possible by changing the peek pulse value (maximum voltage, maximum current, or maximum power) or the number of pulses.

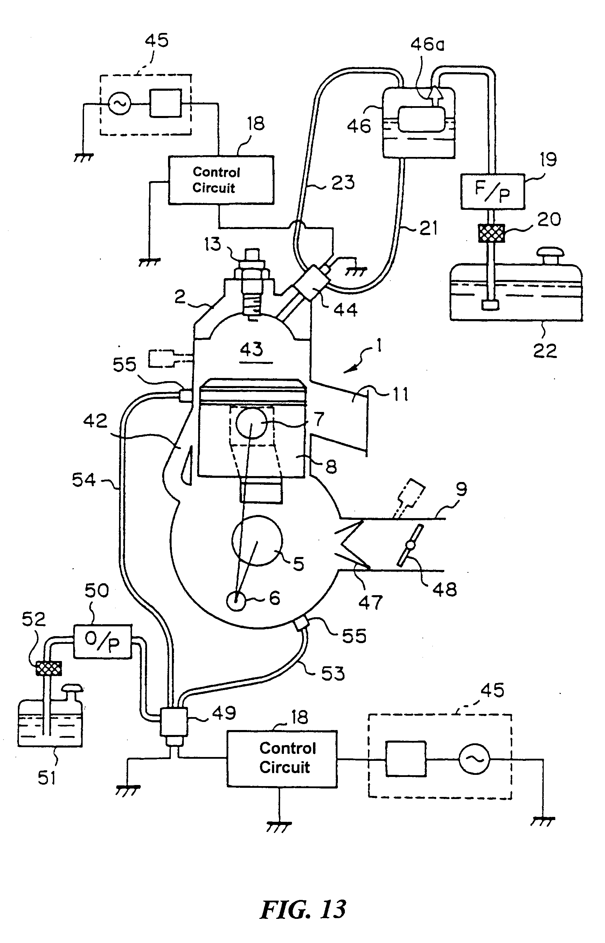

Fig. 13 shows an example of a two-stroke internal combustion engine incorporating a liquid injection apparatus according to this invention. An engine 1, as in Fig. 1 shown above, has a piston 8 reciprocating in the cylinder, and provided with an intake pipe 9 in communication with the crank chamber, and an exhaust pipe 11 in communication with a combustion chamber 43 in the cylinder. The crank chamber and the combustion chamber 43 are connected to each other by a scavenging pipe 42. In the intake pipe 9 are provided a throttle valve 48 and a reed valve 47. To a cylinder head 2 is mounted a high pressure fuel injection apparatus 44 facing the combustion chamber 43. The high pressure fuel injection apparatus 44 is composed integrally of the high pressure generating device 16 and the injector 14 shown in the foregoing embodiment, and adapted to inject fuel by using the impulsive high pressure wave, as described in the foregoing embodiment.

The high pressure fuel injection apparatus 44 is in communication, through a fuel feed pipe 21, with a gas-liquid separating float chamber 46 disposed upwardly of the injection apparatus 44 and provided with a breather hole (not shown) at the top. The gas-liquid separating float chamber 46 is in communication with a fuel tank 22 through a float type valve 46a for a constant liquid level, a fuel pump 19, and a filter 20. The high pressure fuel injection apparatus 44, as in the foregoing embodiment, is connected to a control circuit 18, and further to a power circuit 45 composed of an AC power source and an AC-DC converter circuit. The high pressure fuel injection apparatus 44, as shown in a single dot and dash line in the figure, may be mounted to the side wall of the cylinder block or the intake pipe 9.

The engine of this embodiment also incorporates a high pressure generating device of this invention to feed lubricating oil. Numeral 49 represents the high pressure lubricating oil feed device, and the high pressure generating device 16 described in the foregoing embodiment is employed. Lubricating oil is transferred from the oil feed device 49, through oil pipe 53, 54, to an injector 55, and injected into the crank chamber and cylinder by the injector 55. To the oil feed device 49 is supplied lubricating oil by an oil pump 50 from an oil tank 51 through a strainer 52. The oil feed device 4, as in the foregoing embodiment, has a high pressure generating source and adapted to inject lubricating oil from the injector 55 through a impulsive high pressure; structures, principles of generation of the impulsive high pressure wave and its functions, and the action of injection, are just as in the previous embodiments. In the pressure chamber at places facing one impulsive high pressure generating section, are provided a plurality of lubricating oil delivery ports in communication with oil feed pipes 53, 54.

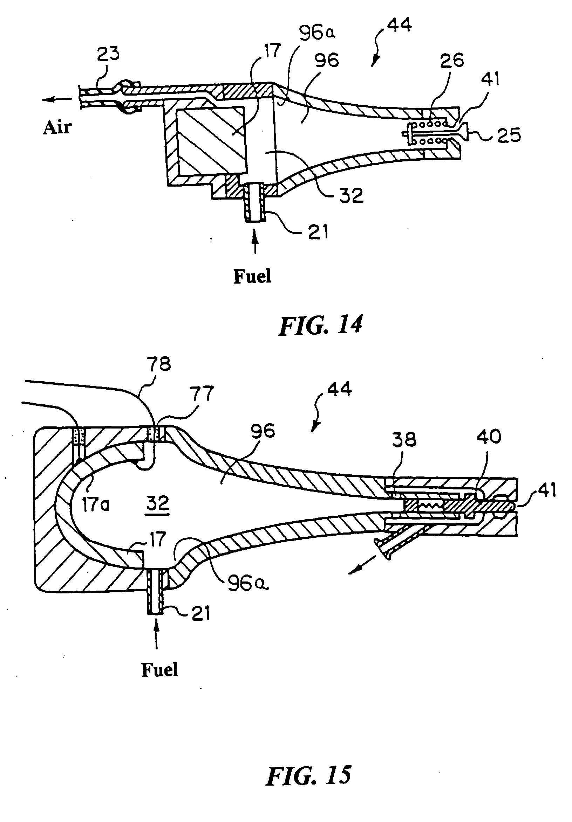

Fig. 14 shows a structural example of the high pressure fuel injection apparatus 44 incorporated in the engine of Fig. 13. The fuel injection apparatus 44 is composed integrally of a high pressure generating device and an injector, and as shown in the figure, provided with art injection hole 41 just behind the pressure chamber 32 through an injection passage 96 with reduced diameter, rather than a fuel pipe. In the injection hole 41 is fitted an outwardly opening valve 25 through a spring 26. Structures and functions of the high pressure generating source 17, functions of pressure rise and high pressure wave propagation in the injection passage 96, and action of fuel injection, are the same as in the preceding embodiment. Numeral 96a represents the delivery port.

Fig. 15 is a structural view of another example of the fuel injection apparatus 44 with a high pressure generating device integrated with an injector. The high pressure generating source 17 is composed of an piezoelectric element with a high pressure wave applying surface 17a in the shape of a concave, facing the pressure chamber 32. Just behind the pressure chamber 32 is formed an injection passage 96 with reduced diameter, the end of which is fitted an inwardly opening valve 40. The focus function of the high pressure wave applying surface 17a, structures and functions of the high pressure generating source 17, functions of pressure rise and high pressure wave propagation in the injection passage 96, and action of fuel injection, are the same as in the preceding embodiment.

According to the invention, as described above, the high pressure wave generated on the high pressure wave applying surface of the high pressure generating means travels straightforward, and mostly is inducted into the opening surface of the delivery port larger than the high pressure wave applying surface provided opposite thereto, to be utilized effectively as a injection energy. The high pressure wave inducted into the delivery port is boosted of its pressure while traveling the reduced diameter section at the end of the injection passage on the opening surface side, then propagated through the injection passage into the injection hole, and further boosted here of its pressure by the small sized injection hole, injecting the liquid with large injection energy.

In this way, the high pressure wave generated, for example, by a piezoelectric element energized by voltage, can be utilized efficiently without waste so as to produce a high pressure wave with a higher energy level, and the high pressure wave can be propagated through the injection passage without attenuation, effecting a small energy loss on the way. The high pressure wave which has reached the injection hole, is further boosted of its pressure in the small sized injection hole, and its energy is then converted to kinetic energy of the liquid, injecting the liquid from the injection hole. In this case, energy loss during propagation through the injection passage is small, so that the amount of injection can be increased as much. Also, the high pressure wave reaches the injection hole without attenuation, thereby increasing injection pressure as well as injection speed.

When such a liquid injection apparatus is employed, for example, as ink injection means of a printing apparatus, ink injection makes use of impulsive high pressure, so that injection speed can be increased, as well as printing speed. Further, valve means is provided near the injection hole, so that ink supply can be controlled properly, preventing blurred printing. Furthermore, if a surface to be printed is placed at a large distance from the injection hole, atomization of the ink particles is accelerated because of high injection speed, effecting even printing in wide areas. In addition, if an article to be printed is moved perpendicular to the direction of injection while controlling the distance between the injection hole and the surface to be printed, printing process can be performed without unevenness or the blur.

When this invention is applied to fuel injection means of a boiler, fuel is injected through impulsive high pressure, so that fuel injection speed is increased, effecting sufficient fuel atomization. Therefore, even a fuel of low volatility such as a heavy oil can be burned reliably, effecting a higher thermal efficiency with a smaller amount of soot.

Also, when this invention is applied to lubricating oil feed means of an internal combustion engine, oil is injected through impulsive high pressure, so that stable and reliable lubricating can be performed, effecting smooth engine operation.

Further, when this invention is applied to a fuel injection apparatus of an internal combustion engine, fuel is injected through impulsive high pressure, so that it can be injected even when the combustion chamber is at a high pressure. Therefore, fuel can be injected for a gasoline engine till the time just before ignition at the end of the compression stroke, and for a diesel engine, fuel can be injected into the combustion chamber at a high pressure during combustion. In this case, fuel injection speed is increased, so that fuel particles are atomised so as to be vaporized reliably, thereby preventing the unburnt component from generating and improving purification of the exhaust gas.

In such an internal combustion engine, fuel is injected through impulsive high pressure, so that fuel injection speed is increased and atomization of fuel particles is accelerated, effecting reliable fuel supply to the combustion chamber at a high pressure. Therefore, a reliable and general purpose fuel injection apparatus can be achieved which is available not only for an intake pipe injection or in-cylinder injection in two-stroke and four-stroke gasoline engines, but also for diesel engines, and in which reliable fuel injection can be effected in all the operating conditions with high combustion efficiency, and generation of unburnt gas is restricted, thereby enhancing the quality of exhaust emissions.

## Claims

1. Liquid injection device comprising a high pressure generating device (16), having a pressure chamber (32) with a liquid induction port (35) and a high pressure wave delivery port (33) as well as an impulsive high pressure generating source (17), and an associated injector (14), **characterized in that** said high pressure generating device (16) comprising means (33) for concentrating the generated high pressure wave.

2. Liquid injection device according to claim 1, **characterized in that** a high pressure applying area (17a) of said impulsive high pressure generating source (17) is oppositely arranged to said delivery port (33), the respective sectional area (W1) of which being larger than the sectional area (W2) of said high pressure applying area (17a).

3. Liquid injection device according to claim 1 or 2, **characterized in that** the sectional area of an injection hole (41) of said injector (14) is smaller than the sectional area (W1) of said delivery port (33).

4. Liquid injection device according to at least one of the preceding claims 1 to 3, **characterized in that** said high pressure generating device (16) is directly connected to said injector (14), via an injection passage (96), or via a liquid pipe (15).

5. Liquid injection device according to at least one of the preceding claims 1 to 4, **characterized in that** said air bleed port (28) is provided in said high pressure generating device (16), in a liquid pipe (15) between said high pressure generating device (16) and said injector (14), or in said injector (14).

6. Liquid injection device according to at least one of the preceding claims 1 to 5, **characterized in that** said injector (14) comprising a valve (25) operable by the pressure generated by said high pressure generating device (16) or by a drive means (60) adapted to open and close said valve (25) in response to the operation of said high pressure generating device (16).

7. Liquid injection device according to claim 6, **characterized in that** both during the time said impulsive high pressure generating source (17) is in operation and out of operation, the injection passage (96) is open at all times over the area from the upstream side of the valve (25) near said injection hole (41) to the delivery port (33).

8. Liquid injection device according to claims 6 or 7, **characterized in that** said valve (25) is arranged so as to be closed when a residual pressure value after the liquid pressure on the outside space with respect to said injection hole (41) is subtracted from the liquid pressure on the injection passage side, is not greater than a predetermined value, and to be opened when the impulsive high pressure of the liquid has reached the valve (25).

9. Liquid injection device according to one of the preceding claims 4 to 8, **characterized in that** said injection passage (96) is formed so as to decrease its sectional area from the delivery port (33) of the pressure chamber side towards the injection hole (41).

10. Liquid injection device according to one of the preceding claims 1 to 9, **characterized in that** said the impulsive high pressure generating source (17) is an electrostrictive element capable of changing its shape in response to changes in intensity of the electric filed.

11. Liquid injection device according to one of the preceding claims 1 to 9, **characterized in that** an impulsive high pressure generating source (17) is a magnetostrictive element capable of changing its shape in response to changes in intensity of the magnetic field.

12. Liquid injection device according to one of the preceding claims 1 to 9, **characterized in that** said impulsive high pressure generating source (17) is a heating element comprising a resistor (205), discharge electrodes (401) or a laser beam generator for vaporizing liquid adjacent said heating element thereby generating a high pressure wave.

13. Liquid injection device according to one of the preceding claims 1 to 12, **characterized in that** the pressure chamber (32) having the form of a cuboid, a rotational-ellipsoid, a cone or a funnel.

14. Liquid injection device according to one of the preceding claims 1 to 13, **characterized in that** said high pressure applying area (17a) is plane or curved such that the high pressure wave is focused on the center of the delivery port (33).

15. Liquid injection device according to one of the preceding claims 1 to 14, **characterized in that** said liquid injection device is a fuel injection device of an internal combustion engine for directly injecting fuel into an intake system (9, 10) or a combustion chamber, or a lubricant feeding means of an internal combustion engine (1), in particular for feeding an injecting lubricating oil, or an ink injection means of a printing device for supplying and injecting ink to articles to be printed.
